# EUROPÄISCHE PATENTANMELDUNG

(11) **EP 4 592 224 A1**
(43) Veröffentlichungstag der Anmeldung: **30.07.2025**
(21) Anmeldenummer: 25152546.5
(22) Anmeldetag: 17.01.2025
(51) Int. Cl.: B65G 47/86, B67C 7/00

(54) **BEHÄLTERKLAMMER SOWIE TRANSPORTSTERN ZUM HALTEN VON BEHÄLTERN**

(30) Priorität: 24.01.2024 DE 102024101938
(71) Anmelder: KHS GmbH, 44143 Dortmund (DE)
(72) Erfinder: Fahldieck, Andreas, 44143 Dortmund (DE); Schug, Nils, 44143 Dortmund (DE)

(57) **Zusammenfassung**

Die Erfindung betrifft eine Behälterklammer (1) zum Transport eines gehaltenen Behälters (2). Die Behälterklammer (1) ist mit einem Tragkörper (3) zum Anordnen der Behälterklammer (1) an einer Behältertransportvorrichtung oder an einer Behälterbehandlungsvorrichtung sowie mit zwei jeweils um eine Schwenkachse (4a, 4b) verschwenkbar an dem Tragkörper (3) gelagerten Greifarmen (5a, 5b) ausgestattet ist, wobei jeder Greifarm (5a, 5b) jeweils an einem äußeren Ende (6a) einen Greifabschnitt (7a, 7b) zum Halten des Behälters (2) und an einem dem äußeren Ende (6a) gegenüberliegenden inneren Ende (6b) eine Steuernut (8a, 8b) aufweist, und wobei die Schwenkachse (4a, 4b) jedes der Greifarme (5a, 5b) zwischen dem Greifabschnitt (7a, 7b) und der Steuernut (8a, 8b) angeordnet ist. Zudem weist die Behälterklammer (1) ein um eine Drehachse drehbares, am Tragkörper (3) gelagertes Steuerelement (10) zum Ansteuern der Greifarme (5a, 5b) auf, wobei das Steuerelement (10) zwei Steuerbolzen (11a, 11b) aufweist, die jeweils derart in der Steuernut (8a, 8b) eines der Greifarme (5a, 5b) beweglich geführt sind, dass mit einer Drehbewegung des Steuerelements (10) die Steuerbolzen (11a, 11b) in der jeweiligen Steuernut (8a, 8b) die Greifarme (5a, 5b) zwischen einer Öffnungsstellung und einer Greifstellung verschwenken. Erfindungsgemäß ist das Steuerelement (10) wenigstens mit einem Grundkörper (12) zum drehbaren Lagern am Tragkörper (3) sowie mit den beiden Steuerbolzen (11a, 11b) einteilig gebildet.

## Beschreibung

Die Erfindung betrifft eine Behälterklammer zum Transport und/oder zur Behandlung eines gehaltenen Behälters sowie einen Transportstern zum Halten und Transportieren von Behältern.

Behälterklammern sowie Transportsterne zum Halten und Transportieren von Behältern sind bereits in vielfältiger Ausgestaltung aus dem Stand der Technik bekannt und werden dabei beispielsweise im Bereich der nahrungsmittelverarbeitenden Industrie verwendet, um die Behälter während ihrer Behandlung bzw. Verarbeitung, insbesondere während des Herstellens, des Befüllens, des Verschließens oder der Reinigung, zu halten. Zum Beispiel nutzen Füllanlagen für PET-Flaschen typischerweise Transportsterne mit Behälterklammern für jeweils eine Flasche zum Transport durch die Anlage. Eine gattungsgemäße Behälterklammer ist aus der Druckschrift EP 3 844 085 B1 bekannt.

Dabei müssen die Behälterklammern besonders einfach aufgebaut und leicht zu reinigen sein, um hohe hygienische Anforderungen erfüllen zu können. Zudem ist es erforderlich, dass die Behälterklammern sich schnell und zuverlässig öffnen und schließen lassen sowie den Behälter sicher halten, ohne ihn jedoch zu deformieren oder sogar zu beschädigen. Zudem sind die Bewegungen der Bauteile der Behälterklammer im Betrieb an einem Transportstern sehr schnell, sodass ein möglichst geringer Hub sowie nur geringe bewegte Massen vorteilhaft sind. Die aus dem Stand der Technik bekannten Behälterklammern erfüllen diese Erfordernisse nicht vollständig.

Der Erfindung liegt die Aufgabe zugrunde, eine Behälterklammer zum Transport und/oder zur Behandlung eines gehaltenen Behälters sowie einen Transportstern zum Halten und Transportieren von Behältern bereitzustellen, die besonders einfach aufgebaut und somit besonders leicht zu reinigen sind, mit einer besonders hohen Geschwindigkeit und zugleich nur geringen Steuerkräften betrieben werden können und dabei zugleich ein zuverlässiges Halten des Behälters ermöglichen.

Die Aufgabe wird erfindungsgemäß durch eine Behälterklammer gemäß Anspruch 1 sowie durch einen Transportstern gemäß Anspruch 14 gelöst. Vorteilhafte Weiterbildungen sind in den abhängigen Ansprüchen angegeben.

Die erfindungsgemäße Behälterklammer zum Transport und/oder zur Behandlung eines gehaltenen Behälters weist einen Tragkörper zum Anordnen der Behälterklammer an einer Behältertransportvorrichtung oder an einer Behälterbehandlungsvorrichtung, insbesondere an einem rotierenden Transportstern, sowie zwei jeweils um eine Schwenkachse verschwenkbar an dem Tragkörper gelagerten Greifarmen auf, wobei jeder Greifarm jeweils an einem äußeren Ende einen Greifabschnitt zum Halten des Behälters und an einem dem äußeren Ende gegenüberliegenden inneren Ende eine Steuernut aufweist, und wobei die Schwenkachse jedes der Greifarme zwischen dem Greifabschnitt und der Steuernut angeordnet ist. Weiterhin umfasst die Behälterklammer ein um eine Drehachse drehbares, am Tragkörper gelagertes Steuerelement zum Ansteuern der Greifarme, wobei das Steuerelement zwei Steuerbolzen aufweist, die jeweils derart in der Steuernut eines der Greifarme beweglich, insbesondere verschieblich, geführt und/oder angeordnet sind, dass mit einer Drehbewegung des Steuerelements die Steuerbolzen in der jeweiligen Steuernut die Greifarme zwischen einer Öffnungsstellung und einer Greifstellung um die Schwenkachse verschwenken. Erfindungsgemäß ist zudem vorgesehen, dass das Steuerelement wenigstens mit einem Grundkörper zum drehbaren Lagern am Tragkörper sowie mit den beiden Steuerbolzen einteilig gebildet ist.

Weiterhin betrifft die Erfindung einen rotierenden Transportstern zum Halten und Transportieren von Behältern mit einem rotierbar um eine Transportsternachse gelagerten Transportsternrahmen sowie mehreren, bevorzugt gleichmäßig entlang des Umfangs des Transportsternrahmens angeordneten, mit jeweiligen Greifabschnitten zum Sternäußeren weisenden, erfindungsgemäßen Behälterklammern.

Die Erfinder haben erkannt, dass durch eine erfindungsgemäße Ausgestaltung der Behälterklammer und insbesondere durch die einfache Konstruktion mit wenig beweglichen Bauteilen sowie durch eine besonders offene Bauweise die Behälterklammer besonders leicht zu reinigen ist und daher den hygienischen Erfordernissen der lebensmittelverarbeitenden Industrie besonders leicht genügt. Zudem sind die im Betrieb der Behälterklammer in Bewegung befindlichen Massen gering, wodurch nur geringe Steuerkräfte benötigt werden, ein besonders leichter und schneller Betrieb möglich ist sowie der Verschleiß vorteilhaft gering gehalten wird. Zudem kann durch die Gestaltung mit den in den Steuernuten geführten Steuerbolzen eine präzise Ansteuerung, eine hohe Haltekraft sowie eine Selbsthemmung bzw. ein selbstständiges Beibehalten einer eingestellten, geöffneten oder geschlossenen Stellung der Behälterklammer erreicht werden. Schließlich sind aufgrund der Gestaltung die Betriebsgeräusche gering.

Eine Behälterklammer im Sinne der Erfindung ist grundsätzlich eine Vorrichtung, die zum Erfassen und Halten eines einzelnen Behälters vorgesehen ist, wobei der Behälter bevorzugt ausschließlich durch die Behälterklammer gehalten wird. Es ist aber auch denkbar, dass der Behälter zudem aufsteht, im Bereich seines Bodens und/oder mittels einer zweiten Klammer gehalten wird und/oder an einem Teil seiner Außenfläche an einem Führungselement anliegt. Bevorzugt wird der Behälter mittels der Behälterklammer an dessen Schulter-, Hals- oder Neckbereich gehalten. Obwohl die Behälterklammer neben dem Halten des Behälters grundsätzlich noch weitere Funktionen und/oder zu einem weiteren Zweck vorgesehene Bauteile aufweisen kann, ist es bevorzugt, dass die Behälterklammer ausschließlich zum Halten eines einzelnen Behälters gebildet ist. Das Halten des Behälters erfolgt ebenfalls bevorzugt ausschließlich kraftschlüssig und/oder durch ein Klemmen des Behälters innerhalb der Behälterklammer und insbesondere mittels der zwei Greifarme.

Behälter im Sinne der Erfindung sind zunächst alle Gegenstände, die einen geschlossenen oder schließbaren Innenraum zur Aufnahme einer Substanz aufweisen. Bei den Behältern kann es sich beispielsweise um Behälter zur Aufbewahrung von Lebensmitteln und/oder von flüssigen, viskosen oder pastösen Substanzen, insbesondere von Getränken, handeln. Bevorzugt sind die Behälter Dosen, Flaschen, Tuben, Kartonverpackungen oder dergleichen. Besonders bevorzugt sind die Behälter, wenigstens im gefüllten und/oder im geschlossenen Zustand, formstabil bzw. formsteif. Grundsätzlich können die Behälter aus einem beliebigen Material oder aus einer Kombination beliebiger Materialien gebildet sein. Bevorzugt sind die Behälter aus Kunststoff, insbesondere Polyethylenterephthalat (PET) oder Polyethylen (PE), aus Glas oder aus Metall, insbesondere Weißblech, verzinntem Stahl oder Aluminium, gebildet. Ganz besonders bevorzugt sind die Behälter Getränkeflaschen aus Glas oder Kunststoff, insbesondere PET-Flaschen. Insbesondere kann es sich dabei um Getränkeflaschen mit Neckring handeln.

Zum Anordnen der Behälterklammer an einer Behältertransportvorrichtung oder einer Behälterbehandlungsvorrichtung und insbesondere an einem rotierenden Transportstern weist die Behälterklammer erfindungsgemäß einen Tragkörper auf. Der Tragkörper kann grundsätzlich als Bauteil oder Baugruppe aus beliebig vielen Bauteilen sowie aus beliebigen Materialien gebildet sein. Bevorzugt ist der Tragkörper im Wesentlichen einstückig und/oder aus Metall oder Kunststoff gebildet. Dabei weist der Tragkörper weiterhin bevorzugt an einem Ende eine Aufnahme für das Steuerelement, insbesondere eine Aufnahme für eine Drehachse oder aber eine einstückig mit dem Tragkörper gebildete Drehachse, auf. An dem anderen Ende weist der Tragkörper bevorzugt einen Abschnitt zur Befestigung an einem Transportsternrahmen eines rotierenden Transportsterns auf, wobei diese Befestigung grundsätzlich kraft- und/oder formschlüssig erfolgen kann und besonders bevorzugt eine lösbare Befestigung, wie eine Verrastung und/oder eine Verschraubung, ist.

Um einen Behälter greifen zu können, weist die Behälterklammer zwei Greifarme auf, die bevorzugt einstückig und/oder aus einem einzigen Material, insbesondere aus einem Metall, wie Aluminium oder Edelstahl, oder aus einem Kunststoff gebildet sind.

Zum unmittelbaren Halten des Behälters ist an einem äußeren Ende jedes Greifarms ein Greifabschnitt vorgesehen, der bevorzugt eine Aufnahmekontur für einen Behälter aufweist, wobei die Aufnahmekontur besonders bevorzugt eine gerundete Greiffläche umfasst. Im Übrigen sind die Greifarme bevorzugt wenigstens im Bereich des Greifabschnitts und insbesondere zwischen einer Schwenkachsenaufnahmeöffnung und dem äußeren Ende im Wesentlichen sich linear erstreckend gebildet. An einem Transportstern erfolgt die Anordnung der Behälterklammer bevorzugt derart, dass sich die Greifarme im Greifabschnitt im Wesentlichen in radialer Richtung und/oder zum Transportsternäußeren hin erstrecken.

Um in der Behälterklammer einen Behälter halten zu können, sind die Greifarme jeweils um eine Schwenkachse verschwenkbar an dem Tragkörper gelagert. Dabei kann die Schwenkachse grundsätzlich ein Bauteil oder ein Abschnitt des Greifarms oder des Tragkörpers sein, wobei es bevorzugt ist, dass die Schwenkachse ein eigenständiges Bauteil ist, das an dem Tragkörper festgelegt und/oder an dem der Greifarm verschwenkbar befestigt ist. Dabei ist der Schwenkarm an der Schwenkachse bevorzugt gleitend gelagert, wobei es auch denkbar ist, ein Lagerelement, wie ein Kugel- oder Walzenlager, zwischen dem Schwenkarm und der Schwenkachse vorzusehen.

Erfindungsgemäß ist die Schwenkachse am Greifarm zwischen dem Greifabschnitt und der Steuernut und bevorzugt dabei im Wesentlichen auf einer Linie zwischen dem Greifabschnitt und der Steuernut angeordnet. Weiterhin bevorzugt sind die beiden Schwenkachsen zueinander parallel, sich am Tragkörper gegenüberliegend, in gleichem Abstand zu dem Greifabschnitt des jeweiligen Greifarms am Tragkörper und/oder in einer Aufstelllage eines Transportsterns im Wesentlichen vertikal angeordnet. Besonders bevorzugt sind die beiden Schwenkachsen der Greifarme zueinander identisch gebildet und/oder sichern den Greifarm zugleich gegen eine axiale Bewegung entlang der Schwenkachse.

Unter der Greifstellung wird der Betriebszustand der Behälterklammer und insbesondere dabei die Position beider Greifarme zum Halten eines Behälters zwischen den Greifarmen verstanden, während die Öffnungsstellung der Betriebszustand der Behälterklammer und insbesondere dabei die Position beider Greifarme ist, die ein Zuführen eines Behälters zwischen die beiden Greifarme bzw. ein Herausbewegen eines zuvor gehaltenen Behälters ermöglicht. Dazu sind die Greifarme jeweils zwischen der Greifstellung und der Öffnungsstellung bewegbar, wobei sich die beiden Greifarme dabei bevorzugt symmetrisch zueinander und/oder über eine zueinander gleich lange Strecke bewegen. Zudem erfolgt die Öffnungs- und Greifbewegung der Greifarme bevorzugt vollständig spiegelsymmetrisch zu einer Mittelposition zwischen den Greifarmen in der Greifstellung und/oder zu einer Mittellängsachse mittig zwischen den Greifarmen, wobei diese Mittellängsachse an einem Transportstern bevorzugt radial von der Transportsternmitte weg erstreckend verläuft.

Am inneren Ende, d.h. an der dem Greifabschnitt gegenüber der Schwenkachse gegenüberliegenden Seite jedes Greifarms, ist erfindungsgemäß eine Steuernut angeordnet, die dazu vorgesehen ist, jeweils mit einem Steuerbolzen zusammenzuwirken, um die Greifarme von einer Öffnungsstellung in eine Greifstellung bewegen zu können. Dabei kann die Steuernut nur als Vertiefung im Material des Greifarms gebildet sein, wobei es bevorzugt ist, dass die Steuernut den Greifarm vollständig durchdringt. Insbesondere bevorzugt ist die Steuernut als Langloch gebildet. Bei der Steuernut handelt es sich zudem nicht lediglich um eine einzelne Steuerfläche, sondern der Steuerbolzen ist zumindest abschnittsweise und bevorzugt über seine volle Bewegungsstrecke innerhalb der Steuernut zu wenigstens zwei sich gegenüberlegenden Seiten begrenzt und insbesondere bevorzugt an zwei Seiten anliegend geführt. Entsprechend wirkt der Steuerbolzen hier also mit zwei Steuerflächen zusammen. Weiterhin bevorzugt weist die Steuernut in etwa eine Breite auf, die dem Durchmesser des Steuerbolzens entspricht. Ebenso bevorzugt weist die Steuernut zwei sich gegenüberliegende und/oder im Wesentlichen parallel verlaufende Seiten- bzw. Innenflächen auf, innerhalb denen der Steuerbolzen angeordnet ist und/oder die als Steuerflächen wirken. Insbesondere bevorzugt ist die Steuernut allseitig von Material des Steuerarms begrenzt und/oder als geschlossene Nut gebildet und/oder bzw. vollständig in einer Fläche des Steuerarms eingebettet.

Um die Greifarme mittels der Steuerbolzen betätigen zu können, ist am Tragkörper ein Steuerelement drehbar um eine Drehachse gelagert, wobei das Steuerelement die beiden Steuerbolzen aufweist. Dabei ist für jeden der beiden Greifarme ein Steuerbolzen des Steuerelements vorgesehen. Die beiden Steuerbolzen weisen dabei bevorzugt einen zueinander identischen Durchmesser auf. Weiterhin sind die Steuerbolzen bevorzugt zylindrisch und insbesondere glattzylindrisch gebildet, um mit einer Mantelfläche des Zylinders innerhalb der Steuernut gleitend geführt zu werden. Bevorzugt weisen die beiden Steuerbolzen zueinander parallele Mittellängsachsen und/oder Mantelflächen auf.

Die Drehachse zum drehbaren Lagern des Steuerelements am Tragkörper kann grundsätzlich beliebig gebildet sein, wobei die Drehachse bevorzugt durch einen zylindrischen Achskörper gebildet ist, der besonders bevorzugt am Tragkörper festgelegt oder einstückig damit gebildet ist. Die Lagerung des Steuerelements erfolgt dabei als Gleitlager, wobei es auch denkbar ist, ein Lagerelement, wie ein Kugellager, zwischen dem Steuerelement und der Drehachse anzuordnen. Um einen Betrieb der Behälterklammer mit besonders geringen Steuerkräften zu ermöglichen und/oder einen besonders einfachen Aufbau zu erreichen, sind die Steuerbolzen, die Schwenkachsen und/oder die Drehachse bevorzugt zueinander parallel angeordnet.

Um die Betätigung der Greifarme über die Steuerbolzen mittels des Steuerelements zu ermöglichen, sind die Steuerbolzen erfindungsgemäß in den Steuernuten der Greifarme beweglich geführt, wozu jeweils ein Steuerbolzen wenigstens abschnittsweise und bevorzugt wenigstens vollständig bzw. über die volle Höhe des Greifarms in die Steuernut eintaucht. Insbesondere bevorzugt sind die Steuerbolzen innerhalb der Steuernut in einer Raumrichtung beidseitig und/oder formschlüssig geführt, während die Steuerbolzen ebenfalls bevorzugt während der Drehbewegung des Steuerelements in einer Längsrichtung der Steuernut und/oder im Wesentlichen rechtwinklig zur Richtung der formschlüssigen Festlegung gleitend innerhalb der Steuernut verschoben werden. Dabei wird der Steuerbolzen bevorzugt beim Bewegen der Greifarme der Behälterklammer zwischen der Öffnungsstellung und der Greifstellung über wenigstens 50 %, besonders bevorzugt wenigstens 75 % und ganz besonders bevorzugt wenigstens 90 % der Länge der Steuernut bewegt. Aufgrund der bevorzugten Anordnung der beiden Steuerbolzen sowie der Drehachse des Steuerelements werden die beiden Steuerbolzen beim Verschwenken des Steuerelements in den Steuernuten in entgegengesetzter Richtung bewegt.

Um die bewegte Masse besonders gering zu halten und dadurch nur geringe Steuerkräfte zu benötigen sowie ein besonders schnelles Schließen der Behälterklammer zu ermöglichen sowie um einen besonders einfachen Aufbau zu erreichen und dadurch auch eine besonders leichte Reinigung zu ermöglichen, ist das Steuerelement erfindungsgemäß wenigstens mit einem Grundkörper zum drehbaren Lagern am Tragkörper sowie mit den beiden Steuerbolzen einteilig gebildet. Unter einer einteiligen Gestaltung wird dabei verstanden, dass der Grundkörper sowie die beiden Steuerbolzen als ein einziger Körper gebildet sind und/oder das einteilige Bauteil keine zueinander beweglichen Bauteile aufweist. Grundsätzlich ist dabei denkbar, dass das Steuerelement aus mehreren, aneinander festgelegten, beispielsweise miteinander verklebten Einzelteilen gebildet ist, wobei es jedoch bevorzugt wird, dass der Grundkörper und die beiden Steuerbolzen einstückig aus einem einzigen Material gebildet werden und somit untrennbar verbunden sind. Dies schließt jedoch nicht aus, dass an oder in dem Steuerelement noch weitere Bauteile angeordnet werden, was insbesondere dann notwendig ist, wenn für eine magnetische Spannvorrichtung zwingend ein oder mehrere Magnete an dem Steuerelement festgelegt sein müssen. Bevorzugt ist das Steuerelement mit allen Bauteilen, gegebenenfalls ausschließlich von Magneten, aus einem einzigen Material, beispielsweise Aluminium oder Edelstahl, und besonders bevorzugt dabei aus einem Kunststoff gebildet.

Ein Transportstern ist grundsätzlich ein sternförmiger und/oder runder Körper mit Taschen zur Aufnahme jeweils eines Behälters, der zum Transport der Behälter vorgesehen ist. Dabei kann ein Transportstern im Sinne der Erfindung grundsätzlich jede Transportvorrichtung sein, die wenigstens abschnittsweise, bevorzugt vollständig durch Rotation mehrere Behälter transportieren kann. Weiterhin kann der Transportstern auch ein Transportkreisel oder eine anderweitige, rotierende Transportvorrichtung sein. Besonders bevorzugt wird der zu transportierende Behälter von dem Transportstern erfasst, wobei sich ganz besonders bevorzugt die Position des Behälters wenigstens in der Transportrichtung in Bezug zum Transportstern während des gesamten Transports nicht verändert. Neben dem Transport des Behälters kann der Transportstern noch weitere Funktionen erfüllen und/oder es können Bearbeitungsvorrichtungen für den Behälter am Transportstern festgelegt sein.

Bei einer bevorzugten Ausgestaltung der erfindungsgemäßen Behälterklammer ist jeder Steuerbolzen beim Verschieben zum Verschwenken der Greifarme zwischen der Öffnungsstellung und der Greifstellung unmittelbar mit einer innenliegenden Innenfläche und/oder einer außenliegenden Innenfläche der jeweiligen Steuernut geführt bzw. damit in Kontakt, wodurch eine besonders präzise und spielfreie Führung der Greifarme erreicht wird. Dabei ist insbesondere ein durchgängiger Kontakt des Steuerbolzens wenigstens einseitig und bevorzugt zweiseitig am Steuerbolzen vorteilhaft, wobei eine formschlüssige und/oder beidseitige Führung orthogonal zur Bewegungsrichtung des Steuerbolzens in der Steuernut insbesondere bevorzugt ist.

Um die bewegten Massen besonders klein zu halten und eine besonders hohe Dynamik bei zugleich nur geringen benötigten Steuerkräften zu ermöglichen, sieht eine vorteilhafte Weiterbildung der erfindungsgemäßen Behälterklammer vor, dass wenigstens der Grundkörper sowie die beiden Steuerbolzen, bevorzugt das gesamte Steuerelement, aus Kunststoff, insbesondere aus einem einzigen Kunststoff, gebildet ist. Weiterhin ist bevorzugt, dass auch die beiden Greifarme aus einem Kunststoff, besonders bevorzugt aus einem einzigen Kunststoff, gebildet sind.

Zudem ist bevorzugt, dass wenigstens die Steuerbolzen und bevorzugt das gesamte Steuerelement, insbesondere einschließlich aller innerhalb der Steuernuten angeordneten Abschnitte, frei von zueinander beweglichen, verschieblichen und/oder rotierbaren Bauteilen gebildet ist, wodurch die Behälterklammer besonders leicht zu reinigen sowie besonders leicht aufgebaut ist.

Weiterhin ist eine Ausgestaltung der erfindungsgemäßen Behälterklammer bevorzugt, bei der das Steuerelement, insbesondere dessen Grundkörper, eine Aufnahmeöffnung für eine Drehachse zum drehbaren Lagern des Steuerelements am Tragkörper aufweist, wobei die Mittellängsachse der Aufnahmeöffnung besonders bevorzugt in einer Ebene mit den Mittellängsachsen der Steuerbolzen und/oder nicht-abstandsgleich zu den beiden Steuerbolzen angeordnet ist. Darüber hinaus ist aber auch eine abstandsgleiche Anordnung denkbar.

Ebenso bevorzugt ist die Drehachse des Steuerelements zwischen den Steuerbolzen angeordnet, wobei insbesondere bevorzugt die Mittelpunkte der beiden Steuerbolzen und der Drehachse auf einer gemeinsamen Linie liegen. Dabei muss die Drehachse jedoch nicht mittig zwischen den beiden Steuerbolzen angeordnet sein. Vielmehr ist sogar bevorzugt, dass die Position der Drehachse von der Mitte zwischen den beiden Steuerbolzen um wenigstens 10 % und höchstens 100 %, besonders bevorzugt um wenigstens 15 % und höchstens 50 % und ganz besonders bevorzugt um wenigstens 20 % und höchstens 30 % des Durchmessers der Drehachse verschoben ist.

Obwohl die beiden Steuernuten einen beliebigen Verlauf aufweisen können, ist eine Weiterbildung der erfindungsgemäßen Behälterklammer bevorzugt, bei der die Steuernuten im Wesentlichen oder zumindest abschnittsweise, bevorzugt vollständig bogenförmig und/oder nicht-linear gebildet sind, um bei einem Drehen des Steuerelements mit konstanter Winkelgeschwindigkeit eine nicht-lineare Bewegungsgeschwindigkeit der beiden Greifarme relativ zueinander zu erreichen und so ein besonders schnelles Bewegen der Behälterklammer in die Öffnungsstellung und zugleich ein besonders festes Halten eines Behälters in der Greifstellung zu ermöglichen. Darüber hinaus ist bevorzugt, dass die beiden Steuernuten zueinander keinen identischen und/oder keinen zueinander spiegelsymmetrischen Verlauf auf den sich gegenüberliegenden Greifarmen aufweisen. Insbesondere ist bevorzugt, dass der gekrümmte Verlauf einer Steuernut an wenigstens einem Ende der Steuernut eine Änderung der Krümmung aufweist, um die Bewegung des Greifarms mittels des Steuerbolzens in diesem Bereich der Steuernut zu verstärken und/oder um eine verbesserte Selbsthemmung in der jeweiligen Position zu erhalten.

Das Ansteuern des Steuerelements kann grundsätzlich in beliebiger Weise und insbesondere mittels einer beliebigen externen Steuerkurve sowie auch mittelbar über beliebig viele weitere Bauteile erfolgen. Es ist jedoch bevorzugt, dass ein Steuerbolzen und besonders bevorzugt genau einer der beiden Steuerbolzen derart gebildet ist, dass ein Ansteuern bzw. ein Drehen des Steuerelements durch ein mittelbares oder unmittelbares Zusammenwirken des Steuerbolzens mit einer externen Steuerkurve oder einem anderen Steuermittel erfolgen kann.

Darüber hinaus ist aber auch denkbar, dass beide Steuerbolzen jeweils mit einer oder mit einer gemeinsamen Steuerkurve oder einem anderen Steuermittel mittelbar oder unmittelbar zusammenzuwirken. Dazu ist es insbesondere bevorzugt, dass der oder die zum Steuern des Steuerelements gebildete Steuerbolzen länger als der andere Steuerbolzen ist und/oder auf der dem Grundkörper des Steuerelements gegenüberliegenden Seite einen aus der Steuernut herausstehenden Steuerabschnitt aufweist und bevorzugt mit dem Steuerabschnitt mit der externen Steuerkurve oder einem anderen Steuermittel zusammenwirken kann. Dabei gelangt der Steuerabschnitt des einen Steuerbolzens bevorzugt in unmittelbaren Kontakt mit einer externen Steuerkurve.

Insbesondere bevorzugt ist eine Weiterbildung einer erfindungsgemäßen Behälterklammer, die eine magnetische Spannvorrichtung aufweist, die die Behälterklammer auf die Greifstellung hin vorspannt und/oder einen magnetischen Totpunkt zwischen der Greifstellung und der Öffnungsstellung zum Halten in der Öffnungsstellung erzeugt. Die Verwendung von Magneten gegenüber mechanischen Lösungen, wie beispielsweise Federn, hat zum einen den Vorteil einer einfacheren Gestaltung und damit einhergehend der leichteren Reinigung und zum anderen wird die Standzeit der Spannvorrichtung durch die Verwendung von Magneten erheblich erhöht. Daher ist auch eine Behälterklammer besonders bevorzugt, die ausschließlich eine magnetische Spannvorrichtung aufweist und/oder ohne jegliche weitere, mechanische Spannvorrichtung gebildet ist. Insbesondere bevorzugt ist eine solche Behälterklammer frei von Federelementen oder dergleichen, zumindest als Teil einer Spannvorrichtung.

Grundsätzlich können an einer Behälterklammer ein oder mehrere Paare von wenigstens zwei zusammenwirkenden Magneten einer Spannvorrichtung angeordnet sein, wobei die magnetische Spannvorrichtung bevorzugt derart gebildet ist, dass die Drehbewegung des Steuerelements zum Schließen der Behälterklammer in einem ersten Winkelbereich in Drehrichtung gegen die Kraft der magnetischen Spannvorrichtung erfolgt und dabei besonders bevorzugt am Ende bzw. im Bereich des Endes des ersten Winkelbereichs der Totpunkt mit einer abstoßenden und der Drehrichtung entgegenstehenden Magnetkraft vorliegt und überstrichen werden kann, und wobei bei einem Fortführen der Drehbewegung das Steuerelement einen zweiten Winkelbereich durchläuft, in welchem dann die Magnetkraft der Spannvorrichtung die Greifarme auf die Greifposition hin vorspannt. Dabei ist bevorzugt, dass das Steuerelement wenigstens einen Magneten aufweist und auch an dem Tragkörper oder an einem anderen, gegenüber dem Tragkörper feststehenden Bauteil wenigstens ein Magnet angeordnet ist. Bevorzugt sind zwei Magnetkörper an dem Steuerelement angeordnet, die jeweils mit einem korrespondierend am Tragkörper angeordneten Magneten zusammenwirken. Generell können aber nicht nur ein oder zwei derartige Paare korrespondierender Magneten vorgesehen sein, sondern beliebig viele. Eine Gestaltung mit zwei Gruppen zusammenwirkender Magnete ist jedoch bevorzugt.

Eine besonders vorteilhafte Ausgestaltung der erfindungsgemäßen Behälterklammer sieht zudem vor, dass die magnetische Spannvorrichtung wenigstens einen an dem Steuerelement angeordneten ersten Magnetkörper und einen an dem Tragkörper angeordneten zweiten Magnetkörper aufweist, wobei der erste und zweite Magnetkörper bevorzugt bezüglich ihrer Polarität und/oder ihres Abstandes zueinander so angeordnet sind, dass sie sich gegenseitig abstoßen und/oder wobei der erste Magnetkörper bevorzugt innerhalb und/oder in einem dem Tragkörper zugewandten Endbereich eines Steuerbolzens angeordnet ist. Besonders bevorzugt sind an oder in jedem der Steuerbolzen genau ein Magnetkörper angeordnet. Grundsätzlich wären aber auch mehrere, mitwirkende Magnetkörper am Steuerelement denkbar, was aber nachteilhaft die Masse erhöhen würde. Die nicht am oder im Steuerelement angeordneten Magnete können anstelle an dem Tragkörper auch an einem beliebigen anderen Bauteil festgelegt sein, wobei dieses Bauteil bevorzugt an der Behälterklammer und/oder gegenüber dem Tragkörper feststehend ist.

Auch die Ausrichtung der magnetischen Pole der Magnetkörper des Steuerelements zueinander kann beliebig sein, wobei die beiden Magnetkörper des Steuerelements bevorzugt identisch zueinander orientiert sind und beispielsweise beide mit dem Südpol auf den feststehenden Magnetkörper des Tragkörpers oder eines anderen Bauteils hin ausgerichtet sind. Eine Anordnung eines Magnetkörpers innerhalb eines Steuerbolzens erfolgt dabei bevorzugt durch Einlegen des Magnetkörpers in eine Bohrung in dem Steuerbolzen, insbesondere an einer auf den Tragkörper zuweisenden Unterseite des Steuerbolzens, wodurch besonders bevorzugt eine form- und/oder kraftschlüssige Festlegung erfolgt. Weiterhin bevorzugt wird der Magnetkörper innerhalb des Steuerbolzens geschlossen angeordnet, wozu beispielsweise eine Abdeckkappe, insbesondere eine Kunststoffabdeckung, den Magnetkörper innerhalb des Steuerbolzens einschließen kann, wobei die Abdeckkappe besonders bevorzugt umlaufend geschweißt oder alternativ verklebt wird. Aber auch ein form- und/oder kraftschlüssiges Schließen ist denkbar.

Eine noch weiter verbesserte Gestaltung der magnetischen Spannvorrichtung einer Behälterklammer sieht vor, dass die magnetische Spannvorrichtung zusätzlich zu dem Magnetpaar aus dem ersten und zweiten Magnetkörper noch wenigstens einen dritten Magnetkörper aufweist, der bevorzugt am Tragkörper festgelegt ist und/oder anziehend mit dem ersten Magnetkörper des Steuerelements zusammenwirkt, wobei besonders bevorzugt durch eine Kombination anziehender und abstoßender Magnetkörper wenigstens im Bereich der Greifstellung eine in etwa konstante Vorspannkraft der Greifarme erreicht wird. Unter dem Bereich der Greifstellung wird dabei insbesondere die Menge der Öffnungszustände der Behälterklammer verstanden, in der die Greifarme Behälter mit unterschiedlichen Behälterdurchmessern und insbesondere unterschiedlichen Behältermündungen halten können, sodass beim Halten und Transportieren von Behältern mit einem unterschiedlichen Durchmesser und insbesondere von unterschiedlichen gehaltenen Flaschen die Krafteinwirkung auf die jeweils gehaltene Flasche unabhängig vom Behälterdurchmesser in etwa gleich groß ist. Durch die Kombination des Zusammenwirkens von zwei feststehenden Magnetkörpern an dem Tragkörper und einem mit dem Steuerelement verschwenkbaren Magnetkörper kann sich in vorteilhafter Weise zumindest abschnittsweise einer Linearität der Krafteinwirkungen angenähert bzw. diese näherungsweise erreicht werden. Bevorzugt werden die Magnetkörper, insbesondere am Tragkörper, derart angeordnet und/oder bezüglich ihrer Magnetstärke gewählt, dass eine solche näherungsweise Linearität erreicht wird.

Beide Magnetkörper am Tragkörper sind dabei bevorzugt zueinander beabstandet und entlang der Bewegungsbahn des Magnetkörpers des Steuerelements beim Drehen des Steuerelements angeordnet. Damit die beiden Magnetkörper am Tragkörper einmal eine anziehende und einmal eine abstoßende Wirkung auf den Magnetkörper des Steuerelements haben können, weisen diese bei einer entsprechenden Ausgestaltung eine voneinander abweichende Orientierung der Pole auf. Generell ist zudem denkbar, dass mehrere Magnetkörper am Steuerelement und nur ein korrespondierender Magnetkörper am Tragkörper angeordnet ist.

Weiterhin bevorzugt ist eine Ausgestaltung der erfindungsgemäßen Behälterklammer bei der im Bereich jedes Steuerbolzens und insbesondere an jedem Steuerbolzen des Steuerelements jeweils ein erster Magnetkörper angeordnet ist, wobei bevorzugt der erste Magnetkörper an dem oder im Bereich des einen Steuerbolzens mit genau einem am Tragkörper angeordneten zweiten Magnetkörper zusammenwirkt und/oder der erste Magnetkörper an dem oder im Bereich des anderen Steuerbolzens am Tragkörper mit einem zweiten Magnetkörper und einem dritten Magnetkörper zusammenwirken kann. Zudem ist bevorzugt, dass am Tragkörper ein zweiter und ein dritter Magnetkörper derart angeordnet sind, dass in der Greifstellung sich der erste Magnetkörper des einen Steuerbolzens in einer Position zwischen den beiden Magnetkörpern befindet und dabei sowohl von dem abstoßenden zweiten Magnetkörper als auch von dem anziehenden dritten Magnetkörper in Richtung der Greifstellung bewegt wird und/oder dass in der Öffnungsstellung sich der erste Magnetkörper des einen Steuerbolzens gegenüber der Greifstellung auf der anderen Seite des abstoßenden zweiten Magnetkörpers und/oder außerhalb des Wirkungsbereichs des anziehenden dritten Magnetkörpers befindet, sodass ausschließlich der abstoßende zweite Magnetkörper in Richtung der Öffnungsstellung drückt. Bevorzugt ist der andere erste Magnetkörper in der Greifstellung zugleich in einer anziehenden Wechselwirkung mit einem korrespondierenden zweiten Magnetkörper und/oder in der Öffnungsstellung außerhalb des Wirkbereichs dieses korrespondierenden zweiten Magnetkörpers.

Schließlich sieht eine vorteilhafte Weiterbildung des rotierenden Transportsterns vor, dass die jeweilige Behälterklammer eine mit ihrem Steuerelement gekoppelte, bevorzugt als Ansteuerbolzen oder als Steuerrolle ausgebildete Ansteuervorrichtung zum Steuern durch eine feststehende Steuerkurve aufweist, wobei die Ansteuervorrichtung mit einem oder mehreren der Steuerbolzen des Steuerelements und dabei bevorzugt mit einem aus der Steuernut herausstehenden Steuerabschnitt zusammenwirkt.

Ein Ausführungsbeispiel einer erfindungsgemäßen Behälterklammer wird nachstehend mit Bezug auf die Zeichnungen näher beschrieben. Es zeigen:
Fig. 1 eine perspektivische Ansicht der Oberseite einer Behälterklammer,
Fig. 2 eine perspektivische Ansicht der Unterseite der Behälterklammer,
Fig. 3 eine Ansicht der Unterseite der Behälterklammer,
Fig. 4 eine Ansicht der Oberseite der Behälterklammer,
Fig. 5 eine Seitenansicht der Behälterklammer,
Fig. 6a eine perspektivische Ansicht eines Steuerelements der Behälterklammer,
Fig. 6b eine Schnittansicht des Steuerelements, und
Fig. 6c eine Ansicht der Oberseite des Steuerelements.

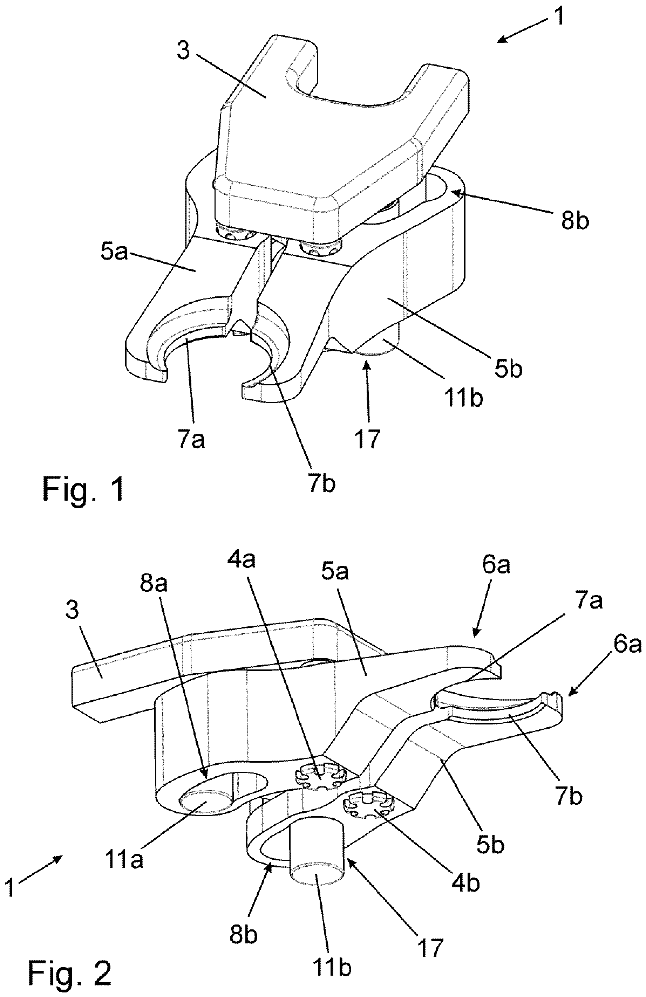

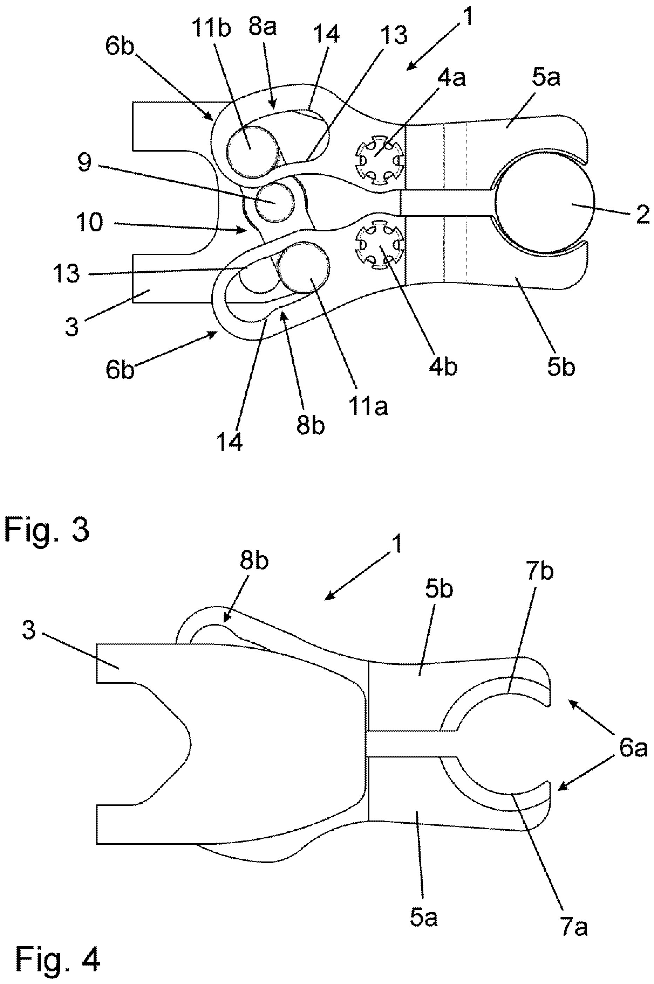

Eine in den Figuren 1 - 5 dargestellte Behälterklammer 1 weist zwei zueinander parallele sowie zueinander verschwenkbare Greifarme 5a, b auf, die zum Halten eines Behälters 2, beispielsweise einer PET-Getränkeflasche, gebildet sind und dazu an einem äußeren Ende 6a der Greifarme 5a, 5b einen Greifabschnitt 7a, b zum unmittelbaren Greifen eines Flaschenhalses aufweisen.

Um die Greifarme 5a, b verschwenken zu können, sind diese jeweils um eine Schwenkachse 4a, b an einem Tragkörper 3 festgelegt, wobei der Tragkörper 3 grundsätzlich dazu vorgesehen ist, die Behälterklammer 1 an einer Transportvorrichtung anordnen zu können. An einem, dem äußeren Ende 6a gegenüberliegenden inneren Ende 6b der Greifarme 5a, b weist jeder der beiden Greifarme 5a, b eine als Langloch gebildete Steuernut 8a, b auf.

Zusätzlich zu den beiden Schenkachsen 4a, b ist zudem auch ein Steuerelement 10 um eine Drehachse 9 drehbar am Tragkörper 3 angeordnet, wobei die beiden Schenkachsen 4a, b und die Drehachse 9 parallel zueinander ausgerichtet sind. Das drehbare Festlegen erfolgt dabei mittels eines einstückig mit dem Tragkörper 3 gebildeten Achselements, das innerhalb einer Aufnahmeöffnung 15 des Steuerelements 10 angeordnet ist.

Das Steuerelement 10 weist zwei Steuerbolzen 11a, b auf, wobei jeweils ein Steuerbolzen 10a, b innerhalb einer Steuernut 8a, b der Greifarme 5a, b derart angeordnet ist, dass bei einem Verdrehen des Steuerelements 10 die Steuerbolzen 11a, b die beiden Greifarme 5a, b aufgrund der Führung in den Steuernuten 8a, b von einer Öffnungsstellung in eine Greifstellung zum Halten eines Behälters 2 bewegen. Dabei befindet sich der Steuerbolzen 11a, b, in jeder der Steuernuten 8a, b durchgängig in Kontakt mit einer innenliegenden Innenfläche 13 sowie einer dieser gegenüberliegenden, außenliegenden Innenfläche 14 der jeweiligen Steuernut 8a, b.

Dabei sind die beiden Greifarme 5a, b sowie das Steuerelement 10 aus einem Kunststoff gebildet. Zudem ist das Steuerelement 10 einstückig aus einem Grundkörper 12 sowie den beiden Steuerbolzen 11a, b gebildet. Um das Steuerelement 10 mittels einer externen Steuereinrichtung, insbesondere einer gegenüber einer Transportvorrichtung feststehenden Steuerkurve, ansteuern zu können, ist einer der beiden Steuerbolzen 11b länger als der andere Steuerbolzen 11a gebildet, sodass der längere Steuerbolzen 11b die zugehörige Steuernut 8b durchragt und somit ein Steuerabschnitt 17 aus der Steuernut 8b an der dem Steuerelement 10 gegenüberliegenden Seite herausragt. Dieser Steuerabschnitt kann dann unmittelbar mit einer externen Steuerkurve zum Ansteuern des Steuerelements 10 und somit zum Verschwenken der Greifarme 5a, b zwischen einer Öffnungsstellung und einer Greifstellung bewegt werden.

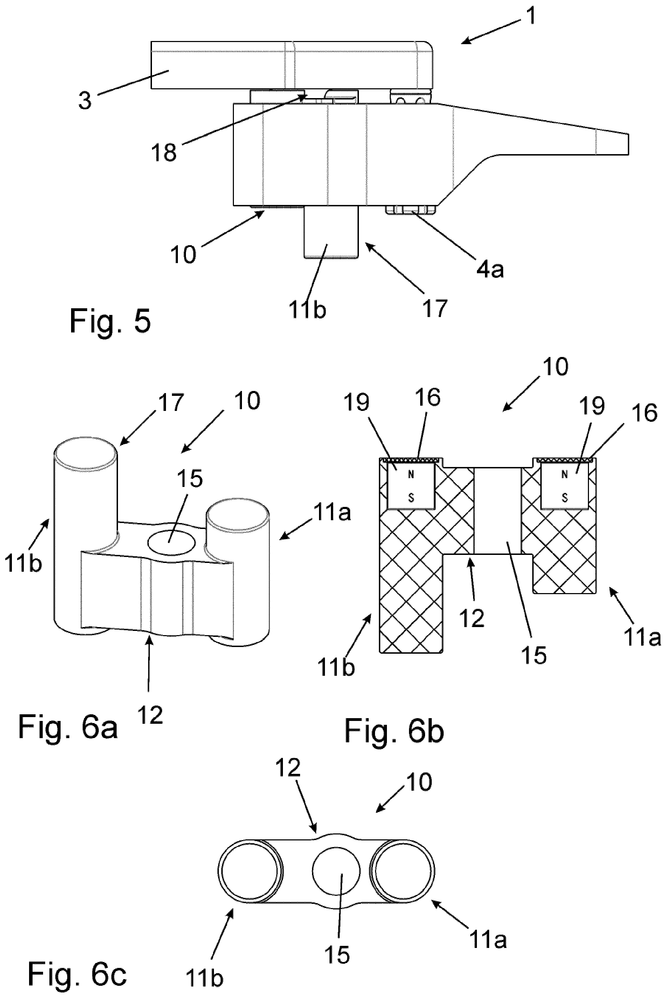

Weiterhin weist die Behälterklammer 1 eine magnetische Spannvorrichtung 18 auf, die die Behälterklammer 1 auf die Greifstellung hin vorspannt und einen magnetischen Totpunkt zwischen der Greifstellung und der Öffnungsstellung zum Halten in der Öffnungsstellung erzeugt. Dazu ist in beiden Steuerbolzen 11a, b jeweils ein erster Magnetkörper 19 angeordnet, wobei jeder der Magnetkörper 19 in den Steuerbolzen 11a, b eingepresst und dann mittels einer Abdeckkappe 16 verschlossen ist. Beide Magnetkörper 19 weisen dabei eine identische Orientierung auf (siehe Fig. 6b). Um als magnetische Spannvorrichtung 18 wirken zu können, wirkt der erste Magnetkörper 19 des einen Steuerbolzens 11a mit genau einem am Tragkörper 3 angeordneten zweiten Magnetkörper zusammen und zudem wirkt der erste Magnetkörper 19 des anderen Steuerbolzens 11b am Tragkörper 3 mit einem zweiten Magnetkörper und einem dritten Magnetkörper zusammen, um zumindest abschnittsweise eine Linearität der Krafteinwirkungen zu erreichen.

### Bezugszeichenliste

- 1: Behälterklammer
- 2: Behälter
- 3: Tragkörper
- 4a, b: Schwenkachse
- 5a, b: Greifarm
- 6a: äußeres Ende
- 6b: inneres Ende
- 7a, b: Greifabschnitt
- 8a, b: Steuernut
- 9: Drehachse
- 10: Steuerelement
- 11a, b: Steuerbolzen
- 12: Grundkörper
- 13: innenliegende Innenfläche
- 14: außenliegende Innenfläche
- 15: Aufnahmeöffnung
- 16: Abdeckkappe
- 17: Steuerabschnitt
- 18: magnetische Spannvorrichtung
- 19: erster Magnetkörper

## Patentansprüche

1. Behälterklammer (1) zum Transport eines gehaltenen Behälters (2), mit
- einem Tragkörper (3) zum Anordnen der Behälterklammer (1) an einer Behältertransportvorrichtung oder an einer Behälterbehandlungsvorrichtung,
- zwei jeweils um eine Schwenkachse (4a, 4b) verschwenkbar an dem Tragkörper (3) gelagerten Greifarmen (5a, 5b), wobei
- jeder Greifarm (5a, 5b) jeweils an einem äußeren Ende (6a) einen Greifabschnitt (7a, 7b) zum Halten des Behälters (2) und an einem dem äußeren Ende (6a) gegenüberliegenden inneren Ende (6b) eine Steuernut (8a, 8b) aufweist, und wobei
- die Schwenkachse (4a, 4b) jedes der Greifarme (5a, 5b) zwischen dem Greifabschnitt (7a, 7b) und der Steuernut (8a, 8b) angeordnet ist,
- einem um eine Drehachse (9) drehbaren, am Tragkörper (3) gelagerten Steuerelement (10) zum Ansteuern der Greifarme (5a, 5b), wobei
- das Steuerelement (10) zwei Steuerbolzen (11a, 11b) aufweist, die jeweils derart in der Steuernut (8a, 8b) eines der Greifarme (5a, 5b) beweglich geführt sind, dass mit einer Drehbewegung des Steuerelements (10) die Steuerbolzen (11a, 11b) in der jeweiligen Steuernut (8a, 8b) die Greifarme (5a, 5b) zwischen einer Öffnungsstellung und einer Greifstellung verschwenken,
**dadurch gekennzeichnet, dass**
- das Steuerelement (10) wenigstens mit einem Grundkörper (12) zum drehbaren Lagern am Tragkörper (3) sowie mit den beiden Steuerbolzen (11a, 11b) einteilig gebildet ist.

2. Behälterklammer nach Anspruch 1, **dadurch gekennzeichnet, dass** beim Verschieben der Steuerbolzen (11a, 11b) zum Verschwenken der Greifarme (5a, 5b) zwischen der Öffnungsstellung und der Greifstellung jeder Steuerbolzen (11a, 11b) unmittelbar mit einer innenliegenden Innenfläche (13) und/oder einer außenliegenden Innenfläche (14) der jeweiligen Steuernut (8a, 8b) in Kontakt ist.

3. Behälterklammer nach Anspruch 1 oder 2, **dadurch gekennzeichnet, dass** wenigstens der Grundkörper (12) sowie die beiden Steuerbolzen (11a, 11b), bevorzugt das gesamte Steuerelement (10), aus Kunststoff gebildet ist.

4. Behälterklammer nach wenigstens einem der vorhergehenden Ansprüche, **dadurch gekennzeichnet, dass** das Steuerelement (10), insbesondere dessen Grundkörper (12), eine Aufnahmeöffnung (15) für eine Drehachse (9) zum drehbaren Lagern des Steuerelements (10) am Tragkörper (3) aufweist, wobei die Mittellängsachse der Aufnahmeöffnung (15) in einer Ebene mit den Mittellängsachsen der Steuerbolzen (11a, 11b) und/oder nicht-abstandsgleich zu den beiden Steuerbolzen (11a, 11b) angeordnet ist.

5. Behälterklammer nach wenigstens einem der vorhergehenden Ansprüche, **dadurch gekennzeichnet, dass** die Steuernuten (8a, 8b) zumindest abschnittsweise und bevorzugt vollständig bogenförmig und/oder nicht-linear gebildet sind, um bei einem Drehen des Steuerelements (10) mit konstanter Winkelgeschwindigkeit eine nicht-lineare Bewegungsgeschwindigkeit der beiden Greifarme (5a, 5b) relativ zueinander zu erreichen.

6. Behälterklammer nach wenigstens einem der vorhergehenden Ansprüche, **dadurch gekennzeichnet, dass** einer oder beide der Steuerbolzen (11a, 11b) derart gebildet ist, dass ein Drehen des Steuerelements (10) durch ein Zusammenwirken des Steuerbolzens (11a, 11b) mit einer externen Steuerkurve oder einem anderen Steuermittel erfolgen kann.

7. Behälterklammer nach Anspruch 6, **dadurch gekennzeichnet, dass** der oder die zum Steuern des Steuerelements (10) gebildete Steuerbolzen (11a, 11b) auf der dem Grundkörper (12) des Steuerelements (10) gegenüberliegenden Seite einen aus der Steuernut (8a, 8b) herausstehenden Steuerabschnitt (17) aufweist und mit dem Steuerabschnitt (17) mit der externen Steuerkurve zusammenwirken kann.

8. Behälterklammer nach wenigstens einem der vorhergehenden Ansprüche, **gekennzeichnet durch** eine magnetische Spannvorrichtung (18), die die Behälterklammer (1) auf die Greifstellung hin vorspannt und/oder einen magnetischen Totpunkt zwischen der Greifstellung und der Öffnungsstellung zum Halten in der Öffnungsstellung erzeugt.

9. Behälterklammer nach Anspruch 8, **dadurch gekennzeichnet, dass** die magnetische Spannvorrichtung (18) derart gebildet ist, dass die Drehbewegung des Steuerelements (10) zum Schließen der Behälterklammer (1) in einem ersten Winkelbereich in Drehrichtung gegen die Kraft der magnetischen Spannvorrichtung (18) erfolgt und dabei bevorzugt im Bereich des Endes des ersten Winkelbereichs der Totpunkt mit einer abstoßenden Magnetkraft vorliegt, und wobei bei einem Fortführen der Drehbewegung das Steuerelement (10) einen zweiten Winkelbereich durchläuft, in welchem dann die Magnetkraft der Spannvorrichtung (18) die Greifarme (5a, 5b) auf die Greifposition hin vorspannt.

10. Behälterklammer nach Anspruch 8 oder 9, **dadurch gekennzeichnet, dass** die magnetische Spannvorrichtung (18) wenigstens einen an dem Steuerelement (10) angeordneten ersten Magnetkörper (19) und einen an dem Tragkörper (3) angeordneten zweiten Magnetkörper aufweist, wobei der erste und zweite Magnetkörper (19) bevorzugt bezüglich ihrer Polarität und ihres Abstandes zueinander so angeordnet sind, dass sie sich gegenseitig abstoßen und/oder wobei der erste Magnetkörper (19) bevorzugt innerhalb und/oder in einem dem Tragkörper (3) zugewandten Endbereich eines Steuerbolzens (11a, 11b) angeordnet ist.

11. Behälterklammer nach wenigstens einem der Ansprüche 8 bis 10,
**dadurch gekennzeichnet, dass** die magnetische Spannvorrichtung (18) zusätzlich zu dem Magnetpaar aus dem ersten und zweiten Magnetkörper (19) noch wenigstens einen dritten Magnetkörper aufweist, der bevorzugt am Tragkörper (3) festgelegt ist und/oder anziehend mit dem ersten Magnetkörper (19) des Steuerelements (10) zusammenwirkt, wobei besonders bevorzugt durch eine Kombination anziehender und abstoßender Magnetkörper (19) im Bereich der Greifstellung eine in etwa konstante Vorspannkraft der Greifarme (5a, 5b) erreicht wird.

12. Behälterklammer nach wenigstens einem der Ansprüche 8 bis 11,
**dadurch gekennzeichnet, dass** an jedem Steuerbolzen (11a, 11b) des Steuerelements (10) jeweils ein erster Magnetkörper (19) angeordnet ist, wobei der erste Magnetkörper (19) des einen Steuerbolzens (11a) mit genau einem am Tragkörper (3) angeordneten zweiten Magnetkörper zusammenwirkt und der erste Magnetkörper (19) des anderen Steuerbolzens (11b) am Tragkörper (3) mit einem zweiten Magnetkörper und einem dritten Magnetkörper zusammenwirken kann.

13. Behälterklammer nach wenigstens einem der Ansprüche 8 bis 12,
**dadurch gekennzeichnet, dass** am Tragkörper (3) ein zweiter und ein dritter Magnetkörper derart angeordnet sind, dass in der Greifstellung sich der erste Magnetkörper (19) des einen Steuerbolzens (11a, 11b) in einer Position zwischen den beiden Magnetkörpern befindet und dabei sowohl von dem abstoßenden zweiten Magnetkörper als auch von dem anziehenden dritten Magnetkörper in Richtung der Greifstellung bewegt wird und/oder dass in der Öffnungsstellung sich der erste Magnetkörper (19) des einen Steuerbolzens (11a, 11b) gegenüber der Greifstellung auf der anderen Seite des abstoßenden zweiten Magnetkörpers und/oder außerhalb des Wirkungsbereichs des anziehenden dritten Magnetkörpers befindet, sodass ausschließlich der abstoßende zweite Magnetkörper in Richtung der Öffnungsstellung drückt.

14. Rotierender Transportstern zum Halten und Transportieren von Behältern, mit
- einem rotierbar um eine Transportsternachse gelagerten Transportsternrahmen sowie
- mehreren, gleichmäßig entlang des Umfangs des Transportsternrahmens angeordneten, mit jeweiligen Greifabschnitten (7a, 7b) zum Sternäußeren weisenden Behälterklammern (1) nach wenigstens einem der Ansprüche 1 - 13.

15. Rotierender Transportstern nach Anspruch 14, **dadurch gekennzeichnet, dass** die jeweilige Behälterklammer (1) eine mit ihrem Steuerelement (10) gekoppelte, bevorzugt als Ansteuerbolzen ausgebildete Ansteuervorrichtung zum Steuern durch eine feststehende Steuerkurve aufweist, wobei die Ansteuervorrichtung mit einem oder mehreren der Steuerbolzen (11a, 11b) des Steuerelements (10) und dabei mit einem aus der Steuernut (8a, 8b) herausstehenden Steuerabschnitt (17) zusammenwirkt.
